Europäisches Patentamt

European Patent Office

Office européen des brevets

(19)

(11) Veröffentlichungsnummer: **0 164 484**
**B1**

(12) **EUROPÄISCHE PATENTSCHRIFT**

(45) Veröffentlichungstag der Patentschrift:
**22.06.88**

(51) Int. Cl.⁴: **A 01 C 1/06**

(21) Anmeldenummer: **84810443.6**

(22) Anmeldetag: **12.09.84**

(54) Verfahren zur Herstellung von Saatgutpellets.

(30) Priorität: **12.06.84 CH 2826/84**

(43) Veröffentlichungstag der Anmeldung:
**18.12.85 Patentblatt 85/51**

(45) Bekanntmachung des Hinweises auf die Patenterteilung:
**22.06.88 Patentblatt 88/25**

(84) Benannte Vertragsstaaten:
**DE FR GB IT NL**

(56) Entgegenhaltungen:
**CH - A - 279 548**
**CH - A - 287 484**
**CH - A - 625 101**
**DE - C - 943 858**
**FR - A - 2 071 376**
**US - A - 3 690 034**

(73) Patentinhaber: **Séchoir la Courtine S.A., CH-2714 Les Genevez (CH)**

(72) Erfinder: **Gerber, Daniel, Wolfenseestrasse 26, CH-4132 Muttenz (CH)**

(74) Vertreter: **Eder, Carl E. et al, Patentanwaltsbüro EDER AG Münchensteinerstrasse 2, CH-4052 Basel (CH)**

**Beschreibung**

Aus der CH-A-561 021 ist bereits ein Saatgutpräparat bekannt, das hergestellt wird, indem 20 kg Mulch (minderwertiges Gras) und 1 kg Rohzelluloseflocken gemischt und bei einer Temperatur von ca. 140° so weit getrocknet werden, dass der Restwassergehalt nur noch 15 Gew.% beträgt. Diesem Vorgemisch werden dann folgende Stoffe beigegeben, wobei die %-Angaben Gew.% bezogen auf das getrocknete Gras bedeuten:

1,5 % 1,4 Butandiol als hydrophyler Bestandteil
2   % Saatgut
0,25% Natriumalginat
0,25% Polyacrylamid
0,25% Octylphenyloctoglykoläther
0,25% Fungizid
0,5 % Nährsalze.

Aus diesem Gemisch lassen sich Formkörper, sogenannte Pellets, pressen. Die vorliegende Erfindung betrifft nun ebenfalls ein Verfahren zur Herstellung von Saatgutpellets sowie nach dem Verfahren hergestellte Saatgutpellets.

Das Verfahren ist dadurch gekennzeichnet, dass man aus einer Mischung enthaltend

1,5– 4   Gew.%, vorzugsweise 3 Gew.% Saatgut
0,1– 0,3 Gew.%, vorzugsweise 0,2 Gew.%
                ungiftige Bitterstoffe
0,2– 0,4 Gew.%, vorzugsweise 0,3 Gew.%
                Fungizide und Pestizide
1,5– 2   Gew.%, vorzugsweise 2 Gew.%
                Netzmittel
44 –48   Gew.%, vorzugsweise 46 Gew.%
                organisches Substrat
46 –50   Gew.%, vorzugsweise 48 Gew.%
                degenerierten Löss mit ca.
                2% Nährstoffgehalt,

insgesamt 99,4–99,6 Gew.% Pellets bildet und diese dann mit 0,4–0,6 Gew.% eines Überzugsmaterials überzieht, das einen semipermeablen Film bildet, der das Austrocknen der Pellets bei hoher Temperatur verhindert, aber Feuchtigkeit von aussen ins Innere eintreten lässt.

Der wesentliche technische Fortschritt, der sich durch diese Erfindung erreichen lässt, besteht nicht nur darin, dass sich wie dies bereits bekannt ist, gut keimfähige Pellets mit Gras- und Kleesamen herstellen lassen, sondern auch Pellets mit Forstsamen und auch mit Samen von Kulturpflanzen wie Mais, Trocken-Reis, Hart-Weizen, Sesam und Hülsenfrüchten. Erfindungsgemässe Pellets unterscheiden sich von den bereits bekannten Pellets dadurch, dass sie weniger organisches Substrat, dafür jedoch degenerierten Löss enthalten. Degenerierter Löss ist ein mindestens teilweise abgebauter Löss, also Löss, der eine gegenüber dem normalen, für die Ziegeleiprodukte verwendeten Löss reduzierte Konsistenz aufweist und daher für die Ziegelei nicht mehr verwendbar ist. Dadurch wird die Einlagerung von Feuchtigkeit, die mindestens 12%, höchstens jedoch 19% betragen soll, verbessert, dies insbesondere dann, wenn ein feinkörniger Löss, also ein Löss mit grosser Kornoberfläche verwendet wird.

Zur Herstellung von erfindungsgemässen Saatgut-Pellets werden beispielsweise

2   Gew.% Samen von Bermudagras
0,3 Gew.% eines Bitterstoffes als Saatschutz
0,3 Gew.% eines Fungizides und Pestizides
1,5 Gew.% eines Netzmittels in Form eines oberflächenaktiven Stoffes, z. B. eines Fettsäure-Glyzerin-Derivates, eines Formaldehydharzes oder eines Aluginats als hydrophile chemische Beigabe
46   Gew.% Heumehl
1   Gew.% Dünger
48   Gew.% natürlicher, unbehandelter, degenerierter Löss vom Bruderholz in Basel

gut miteinander gemischt. Aus dieser Mischung werden dann mittels zweier sich gegenläufig drehender Formwalzen Presslinge im Gewicht von 3,5 bis 7 g hergestellt. Diese werden dann mit einem Film aus natürlichem Latex überzogen, der ca. 0,5 Gew.% der fertigen Pellets beträgt und die Eigenschaft hat, dass er bei Trockenheit die Poren schliesst, bei Feuchtigkeit aber aufquillt. Es soll bei der ganzen Herstellung der Pellets darauf geachtet werden, dass die Temperatur nie höher wird als 30°C.

Derartige Pellets können von Hand oder maschinell oder auch vom Flugzeug aus ausgestreut werden. Sobald die Feuchtigkeit der Umgebung der Pellets eine gewisse Grenze überschreitet, wird die Feuchtigkeit vom Pellet aufgenommen und der Samen beginnt zu keimen, wobei die Bitterstoffe verhindern, dass die Keimlinge von Tieren gefressen werden, während die Fungizide und Pestizide den Samen gegen Pilze und ähnliche Schädlinge schützen.

Ein weiteres Beispiel für die Herstellung erfindungsgemässer Pellets ist folgendes: Man mischt

4   Gew.% klein-kalibrigen Mais
0,3 Gew.% des im ersten Beispiel beschriebenen Bitterstoffes
0,3 Gew.% der im ersten Beispiel genannten Fungizide und Pestizide
1,5 Gew.% des im ersten Beispiel genannten Netzmittels
45   Gew.% Strohmehl, beispielsweise aus Mais-Stroh
1   Gew.% Dünger
47,4 Gew.% degenerierten Löss, beispielsweise vom Bruderholz.

Aus diesem Gemisch werden dann ebenfalls vorzugsweise mittels zweier sich gegenläufig drehender Formwalzen Pellets von 3,5 bis 7 g hergestellt, die mit einer Schicht von ca. 0,5 Gew.% Getreidestärke überzogen werden. Diese Schicht kann beispielsweise mittels eines Sprühverfahrens aufgebracht werden. Auch bei der Herstellung dieser Pellets soll die Produktetemperatur nie mehr als 30°C betragen. Auch diese Pellets können genau gleich wie die nach dem ersten Beispiel beschriebenen Pellets von Hand oder maschinell oder sogar mit dem Flugzeug verstreut werden.

**Patentansprüche**

1. Verfahren zur Herstellung von Saatgutpellets, dadurch gekennzeichnet, dass man aus einer Mischung, enthaltend

| | | |
|---|---|---|
| 1,5– | 4 | Gew.% Saatgut |
| 0,1– | 0,3 | Gew.% ungiftige Bitterstoffe |
| 0,2– | 0,4 | Gew.% Fungizide und Pestizide |
| 1,5– | 2 | Gew.% Netzmittel |
| 44 | –48 | Gew.% organisches Substrat |
| 46 | –50 | Gew.% degenerierten Löss mit ca. 2% Nährstoffgehalt, |

insgesamt 99,4–99,6 Gew.% Pellets bildet und diese dann mit 0,4–0,6 Gew.% eines Überzugsmaterials überzieht, das einen semipermeablen Film bildet, der das Austrocknen der Pellets bei hoher Temperatur verhindert, aber Feuchtigkeit von aussen ins Innere eintreten lässt.

2. Verfahren nach Anspruch 1, dadurch gekennzeichnet, dass die Mischung folgende Bestandteile enthält

| | |
|---|---|
| 3 | Gew.% Saatgut |
| 0,2 | Gew.% ungiftige Bitterstoffe |
| 0,3 | Gew.% Fungizide und Pestizide |
| 2 | Gew.% Netzmittel |
| 46 | Gew.% organisches Substrat |
| 48 | Gew.% degenerierten Löss mit ca. 2% Nährstoffgehalt. |

3. Verfahren nach Anspruch 1 oder 2, dadurch gekennzeichnet, dass das organische Substrat aus gemahlenem Trockengras und/oder Algen besteht.

4. Verfahren nach einem der Ansprüche 1 bis 3, dadurch gekennzeichnet, dass das Netzmittel ein hydrophiles Chemikalium ist.

5. Verfahren nach einem der Ansprüche 1 bis 4, dadurch gekennzeichnet, dass man als organisches Substrat Strohmehl verwendet.

6. Verfahren nach einem der Ansprüche 1 bis 5, dadurch gekennzeichnet, dass man den degenerierten Löss mit ca. 2% Nährstoffgehalt durch Mischen von ca. 45–50 Gewichts-Teilen degeneriertem Löss mit 1 Gewichtsteil Dünger herstellt.

7. Verfahren nach einem der Ansprüche 1 bis 6, dadurch gekennzeichnet, dass man als Überzugsmaterial Getreidestärke verwendet.

8. Verfahren nach einem der Ansprüche 1 bis 6, dadurch gekennzeichnet, dass man als Überzugsmaterial Latex verwendet.

9. Verfahren nach einem der Ansprüche 1 bis 8, dadurch gekennzeichnet, dass man das Gemisch zwischen Formwalzen zu Pellets presst und auf diesen den Überzug durch Aufsprühen aufbringt.

10. Saatgutpellets, hergestellt nach dem Verfahren nach einem der Ansprüche 1 bis 9.

11. Saatgutpellets nach Anspruch 10, dadurch gekennzeichnet, dass sie ein Gewicht von 3,5 bis 7 g aufweisen.

**Claims**

1. Method for the production of seed stock pellets, characterised thereby, that from a mixture containing

| | | |
|---|---|---|
| 1.5– | 4 | % by weight of seed stock, |
| 0.1– | 0.3 | % by weight of non-toxic bitter principles, |
| 0.2– | 0.4 | % by weight of fungicides and pesticides, |
| 1.5– | 2 | % by weight of wetting agents, |
| 44 | –48 | % by weight of organic substrate and |
| 46 | –50 | % by weight of degenerated loess with about 2% of nutrient content, |

one forms altogether 99.4 to 99.6% by weight of pellets and then coats these with 0.4 to 0.6% by weight of a coating material which forms a semipermeable film which prevents the drying-out of the pellets at high temperature, but lets moisture from the outside enter into the interior.

2. Method according to claim 1, characterised thereby, that the mixture contains the following components:

| | |
|---|---|
| 3 | % by weight of seed stock, |
| 0.2 | % by weight of non-toxic bitter principles, |
| 0.3 | % by weight of fungicides and pesticides, |
| 2 | % by weight of wetting agents, |
| 46 | % by weight of organic substrate and |
| 48 | % by weight of degenerated loess with about 2% of nutrient content. |

3. Method according to claim 1 or 2, characterised thereby, that the organic substrate consists of ground dry grass and/or straw and/or algae.

4. Method according to one of the claims 1 to 3, characterised thereby, that the wetting agent is a hydrophilic chemical.

5. Method according to one of the claims 1 to 4, characterised thereby, that one uses ground straw as organic substrate.

6. Method according to one of the claims 1 to 5, characterised thereby, that one produces the degenerated loess with a nutrient content of about 2% by mixing about 45 to 50 parts by weight of degenerated loess with 1 part by weight of fertiliser.

7. Method according to one of the claims 1 to 6, characterised thereby, that one uses cereal starch as coating material.

8. Method according to one of the claims 1 to 6, characterised thereby, that one uses latex as coating material.

9. Method according to one of the claims 1 to 8, characterised thereby, that one presses the mixture into pellets between moulding rollers and applies the coating onto these pellets by spraying.

10. Seed stock pellets produced by the method according to one of the claims 1 to 9.

11. Seed stock pellets according to claim 10, characterised thereby, that they display a weight of 3.5 to 7 grams.

**Revendications**

1. Procédé pour la fabrication de pellets de semences, caractérisé en ce que l'on forme au total 99,4–99,6% en poids de pellets d'un mélange contenant

1,5– 4   % en poids de semences
0,1– 0,3 % en poids de substances amères non toxiques
0,2– 0,4 % en poids de fongicides et pesticides
1,5– 2   % en poids d'agent mouillant
44 –48   % en poids de substrat organique
46 –50   % en poids de loess dégénéré contenant environ 2% de substances nutritives,

et on revêt ensuite ces pellets avec 0,4–0,6% en poids d'une matière de revêtement, qui forme un film semi-perméable qui empêche le séchage des pellets à haute température, mais laisse pénétrer l'humidité de l'extérieur vers l'intérieur.

2. Procédé selon la revendication 1, caractérisé en ce que le mélange contient les constituants suivants:

3   % en poids de semences
0,2 % en poids de substances amères non toxiques
0,3 % en poids de fongicides et pesticides
2   % en poids d'agent mouillant
46  % en poids de substrat organique
48  % en poids de loess dégénéré contenant environ 2% de substances nutritives.

3. Procédé selon la revendication 1 ou 2, caractérisé en ce que le substrat organique consiste en herbe séchée et/ou paille et/ou algues.

4. Procédé selon l'une des revendications 1 à 3, caractérisé en ce que l'agent mouillant est un produit chimique hydrophile.

5. Procédé selon l'une des revendications 1 à 4, caractérisé en ce que l'on utilise comme substrat organique de la farine de paille.

6. Procédé selon l'une des revendications 1 à 5, caractérisé en ce que l'on prépare le loess dégénéré contenant environ 2% de substances nutritives par mélange d'environ 45–50 parties en poids de loess dégénéré avec 1 partie en poids d'engrais.

7. Procédé selon l'une des revendications 1 à 6, caractérisé en ce que l'on utilise comme matériau de revêtement de l'amidon de céréales.

8. Procédé selon l'une des revendications 1 à 6, caractérisé en ce que l'on utilise comme matériau de revêtement du latex.

9. Procédé selon l'une des revendications 1 à 8, caractérisé en ce que l'on comprime le mélange en pellets entre des cylindres de formage et on applique le revêtement sur ces pellets par pulvérisation.

10. Pellets de semences, fabriqués par le procédé selon l'une des revendications 1 à 9.

11. Pellets de semences selon la revendication 10, caractérisé en ce qu'ils ont un poids de 3,5 à 7 g.